Europäisches Patentamt

European Patent Office

Office européen des brevets

(19)

(11) EP 0 795 811 A1

(12) EUROPEAN PATENT APPLICATION

(43) Date of publication:
17.09.1997 Bulletin 1997/38

(51) Int Cl.⁶: **G06F 3/033**

(21) Application number: 97301000.2

(22) Date of filing: 17.02.1997

(84) Designated Contracting States:
**DE ES FR GB IT**

(30) Priority: **12.03.1996 GB 9605216**

(71) Applicant: **NCR INTERNATIONAL INC.**
**Dayton, Ohio 45479 (US)**

(72) Inventor: **Reed, Dominick C.**
**Derby DE21 7TF (GB)**

(74) Representative: **Irish, Vivien Elizabeth**
**International IP Department,**
**NCR Limited,**
**206 Marylebone Road**
**London NW1 6LY (GB)**

(54) **Display system and method of moving a cursor of the display screen**

(57)     A target area (32) is located at a position remote from a cursor (30) on a touch-sensitive display screen (14,16). The target area (32) is movable from a third position to a fourth position on the touch-sensitive display screen (14,16) in response to a user touching the touch-sensitive screen in the region of the target area (32) and dragging the target area (32) from the third position to the fourth position. The cursor (30) moves from the first position to the second position in response to the target area (32) being dragged from the third position to the fourth position.

## FIG. 1

## Description

The present invention relates to moving a cursor on a display screen of a monitor, and is particularly directed to moving such a cursor by using a touch-sensitive screen which overlies the display screen.

The use of a touch-sensitive screen to facilitate movement of a cursor on a display screen of a monitor is known. Typically, to move the cursor to a desired target selection on the display screen, a finger of a user is first placed on the touch-sensitive screen over the cursor on the display screen. The finger is then moved across the touch-sensitive screen to "drag" the cursor to the location of the desired target selection on the display screen. If the target selections on the display screen are relatively small in size, the finger may obscure the desired target selection when the finger arrives at the location of the desired target selection. Moreover, if small target selections are densely packed together, the positioning of the cursor on the desired target selection may be slow and inaccurate.

It is an object of the present invention to provide a method and system for moving a cursor on a display screen which results in accurate positioning of the cursor on the desired target position without obscuring the target position.

In accordance with one aspect of the present invention there is provided a method of moving a cursor from a first position to a second position on a touch-sensitive display screen of a display system comprising the steps of moving a target area located at a position remote from the cursor from a third position to a fourth position on the touch-sensitive display screen in response to a user touching the touch-sensitive display screen in the region of the target area and dragging the target area from the third position to the fourth position and moving the cursor from the first position to the second position in response to the target area being dragged from the third position to the fourth position.

In one advantageous embodiment, the distance between the third and fourth positions is greater than the distance between the first and second positions.

In accordance with another aspect of the present invention, there is provided a display system comprising a touch-sensitive display screen and a processing unit including cursor display means for providing a cursor on the touch-sensitive display screen, target area display means for providing a target area on the touch-sensitive display screen at a position remote from the cursor, target area control means for moving the target area from a third position to a fourth position on the touch-sensitive display screen in response to a user touching the touch-sensitive display screen in the region of the target area and dragging the target area from the third position to the fourth position and cursor control means for moving the cursor from a first position to a second position on the touch-sensitive display screen when the target area moves from the third position to the fourth position.

Embodiments of the present invention will now be described by way of example by reference to the accompanying drawings in which:

Fig. 1 is a perspective view of a display system embodying the present invention;

Fig. 2 is a sectional view, taken approximately along line 2-2 of Fig. 1, showing a touch-sensitive screen overlying a display screen of a monitor;

Fig. 3 is block diagram representation of a processing unit used in the display system of Figs. 1 and 2;

Fig. 4 is an enlarged view of a cursor and a target area on the display screen of the monitor of the display system of Figs. 1 and 2;

Fig. 5 is a view similar to Fig. 4 and showing a finger touching that portion of the touch-sensitive screen which overlies the target area on the display screen;

Fig. 6 is a view similar to Fig. 5 and showing the finger, the target area, and the cursor in another position;

Fig. 7 is a flowchart depicting operation of the display system of Figs. 1 and 2 in accordance with the present invention;

Fig. 8 is a view similar to Fig. 5 and showing another embodiment of the present invention;

Fig. 9 is a view similar to Fig. 8 and showing the finger, the target area, and the cursor in another position; and

Fig. 10 is a view similar to Fig. 9 and showing the finger, the target area, and the cursor in yet another position.

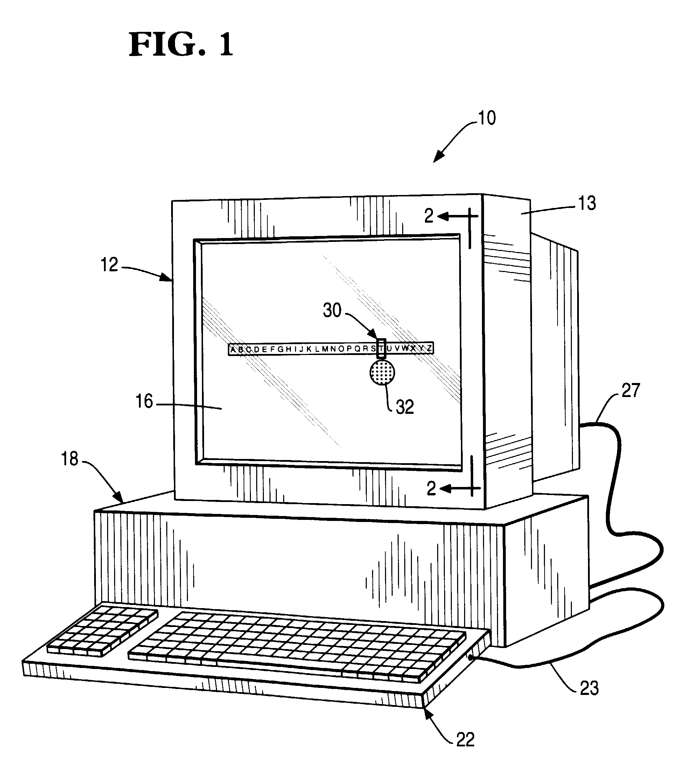

The present invention is directed to moving a cursor on a display screen of a monitor of a display system. The specific construction and use of the display system may vary. A display system 10 embodying the present invention is illustrated in Fig. 1.

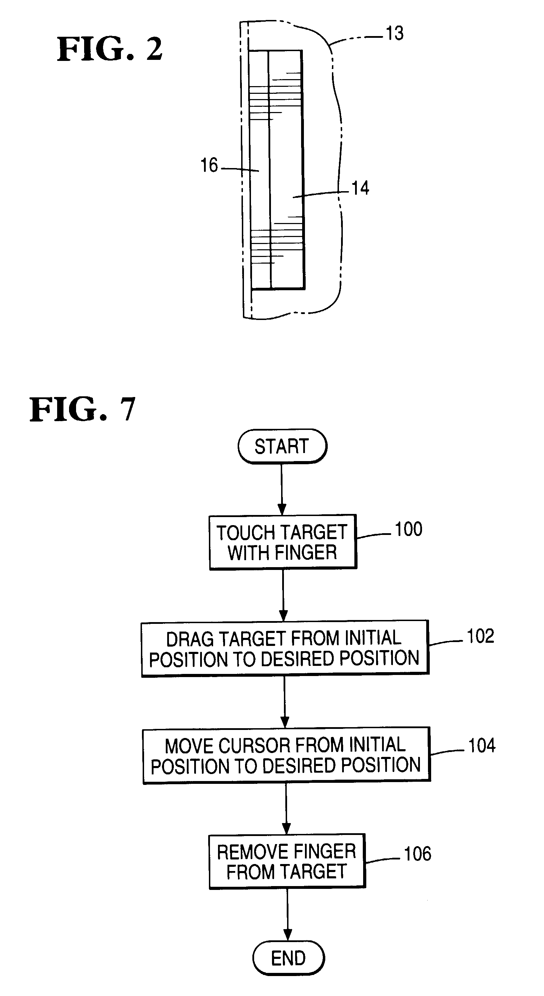

The display system 10 includes a monitor 12 enclosed in a monitor housing 13, as shown in Figs. 1 and 2. The display system 10 further includes a processing unit 18 which is electrically connected through a cable 20 to the monitor 12. A keyboard 22 is electrically connected through cable 23 to the processing unit 18. The monitor 12 has a display screen 14 and a touch-sensitive screen 16 overlying the display screen 14, as shown in Fig. 2. The touch-sensitive screen 16 may be of the type which uses capacitive current to provide an output signal indicative of the location at which the touch-sensitive screen 16 is being touched. An image of a cursor 30 and an image of a target area 32 which is separate from the cursor 30 in accordance with the present invention are displayed on the display screen 14, as shown in Fig. 1. The touch-sensitive screen 16 provides output signals on line 17 to the processing unit 18.

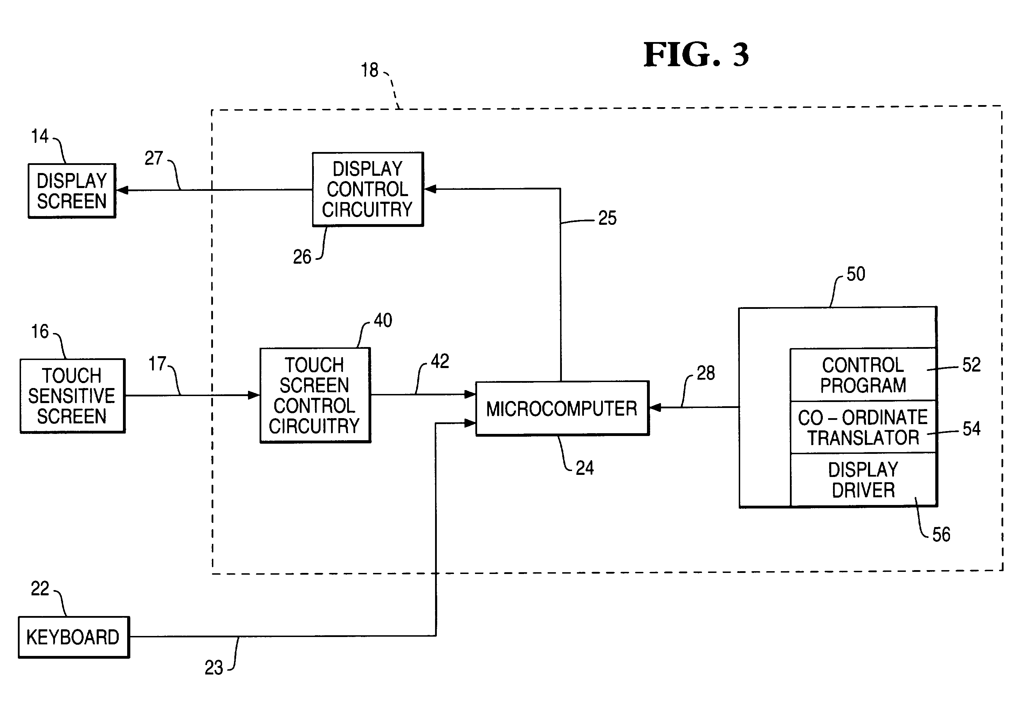

Referring to Fig. 3, the processing unit 18 receives input signals from the keyboard 22 and the touch-sensitive screen 16 and provides output signals to the display screen 14 in response to the input signals. More specifically, the processing unit 18 includes touch-screen control circuitry 40 which receives input signals on line 17 from the touch-sensitive screen 16 and provides output signals on line 42 in response thereto. The touch-screen control circuitry 40 continually monitors the touch-sensitive screen 16 for sensing any touching or "dragging" event which occurs on the touch-sensitive screen 16. The processing unit 18 further includes a microcomputer 24 and a memory 50 which communicates via signals on line 28 with the microcomputer 24. Suitable microcomputers and memories are readily available in the marketplace. Their structure and operation are well known and, therefore, will not be described.

The microcomputer 24 receives input signals on cable 23 from the keyboard 22 and input signals on line 42 from the touch-screen control circuitry 40, and processes these input signals in accordance with instructions of a main control program 52 stored in the memory 50. The microcomputer 24 processes its input signals and generates output signals in accordance with instructions of a co-ordinate translator 54 stored in the memory 50. The microcomputer 24 then provides the output signals on line 25 to display control circuitry 26 in accordance with instructions of a display driver 56 stored in the memory 50. The display control circuitry 26 provides output signals on line 27 to the display screen 14 to be displayed. The structure and operation of the display control circuitry 26 are well known and, therefore, will not be described.

In known touch-screen systems, input signals from a touch-sensitive screen are first translated into co-ordinates of an internal co-ordinate system. The internal co-ordinates are then linearly transformed into display co-ordinates. The linear transformation of internal co-ordinates to display co-ordinates may be mathematically represented as:

$$xb = a(xa) + b(ya) + c$$

$$yb = d(xa) + e(ya) + f$$

where

   (xa, ya) are the internal co-ordinates
   (xb, yb) are the display co-ordinates
   (a, b, c, d, e, f) are transformation parameters

wherein

a          represents horizontal scaling;
b and e    represent rotational translation;
c          represents horizontal translation;
d          represents vertical scaling; and
f          represents vertical translation.

In the known touch-screen systems, the system is calibrated and the parameters are selected such that the display co-ordinates of the cursor coincide with the location at which the touch-screen is being touched.

In accordance with the present invention, the touch-screen system is calibrated and the parameters are selected such that the display co-ordinates of the cursor are offset from the location at which the touch-screen is being touched. In particular, the touch-screen control circuitry 40 linearly transforms internal co-ordinates into display co-ordinates in a manner which enables the cursor 30 and the target area 32 to be separate from each other on the display screen 14, as explained in more detail hereinbelow.

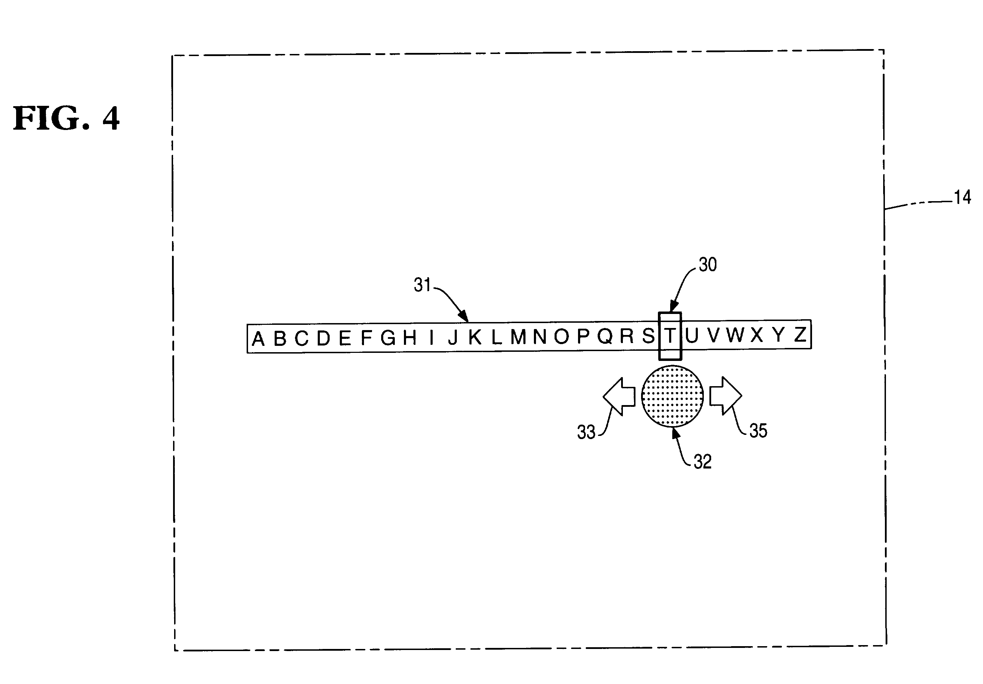

Referring to Fig. 4, the image of the cursor 30 appearing on the display screen 14 of the monitor 12 is movable along an image of a text string 31 which also appears on the display screen 14. The text string 31 lies along a horizontally extending linear axis on the display screen 14. As shown in Fig. 4, the letter "T" is being selected by the cursor 30. An image of the target area 32 also appears on the display screen 14. The target area 32 is located below the cursor 30 on the display screen 14. The cursor 30 and the target area 32 are separate from each other. The target area 32 is movable in opposite directions (as shown with arrows 33 and 35 in Fig. 4) along a linear axis on the display screen which is parallel to the linear axis of the text string 31.

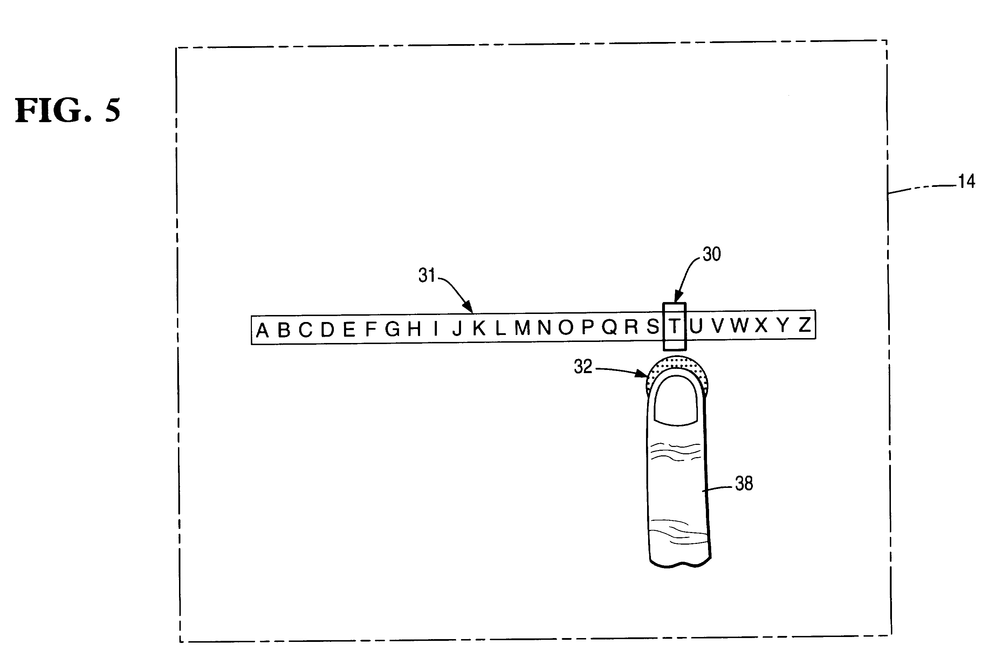

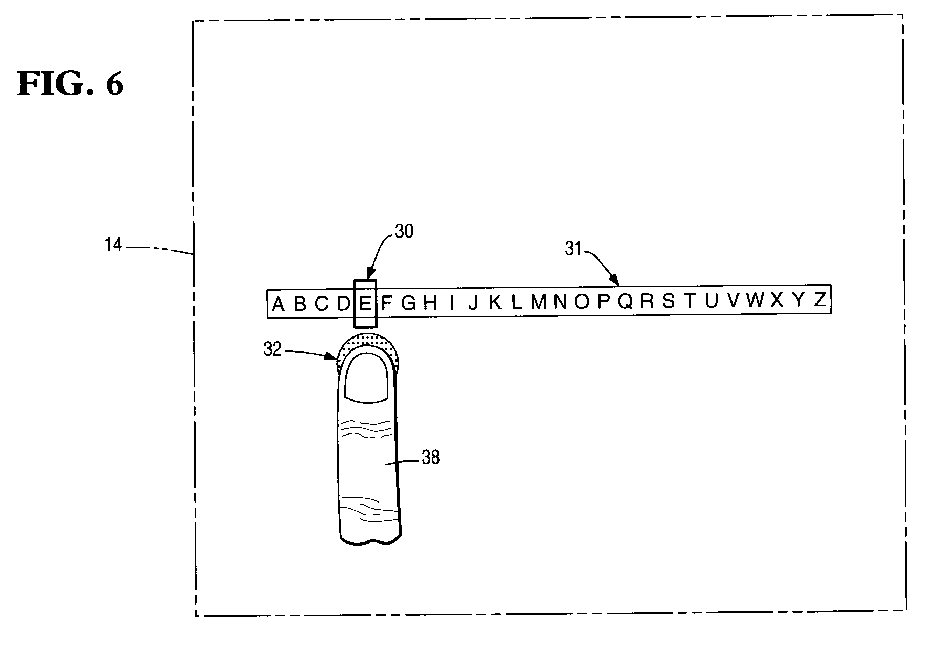

To move the cursor 30 from one position to another position on the display screen 14, a finger 38 (Fig. 5) of a user is placed on the surface of the touch-sensitive screen 16 in the region of the target area 32. The finger 38 generally covers the entire target area 32. After the finger 38 is placed on the touch-sensitive screen 14 at the initial location such as shown in Fig. 5, the finger 38 is moved across the touch-sensitive screen 16 to another location on the touch-sensitive screen 16 such as shown in Fig. 6. The finger 38 remains in contact with the surface of the touch-sensitive screen 16 during movement of the finger 38 from the position shown in Fig. 5 to the position shown in Fig. 6.

When the finger 38 is moved from the position shown in Fig. 5 to the position shown in Fig. 6, the target area 32 is "dragged" from its initial position shown in Fig. 5 to the position shown in Fig. 6. In response to the target area 32 being dragged from the position shown in Fig. 5 to the position shown in Fig. 6, the cursor 30 located above the target area 32 is dragged from its position shown in Fig. 5 to the position shown in Fig. 6. As shown in Fig. 6, the letter "E" is being selected by the cursor 30.

With reference to the above-identified pair of linear transformation equations and the above-described movement of the cursor 30 and the target area 32 with reference to Figs. 4-6, it should be apparent that the transformation comprises only vertical translation which is represented by the parameter "f". Since there is no horizontal translation, the parameter "c" is zero. Also, since there is no rotational translation, the parameters "b" and "e" are zero. There is no scaling in the movement of the cursor 30 and the target area 32 as shown in Figs. 4-6. Since there is no scaling, the parameters "a" and "d" each have a value of one.

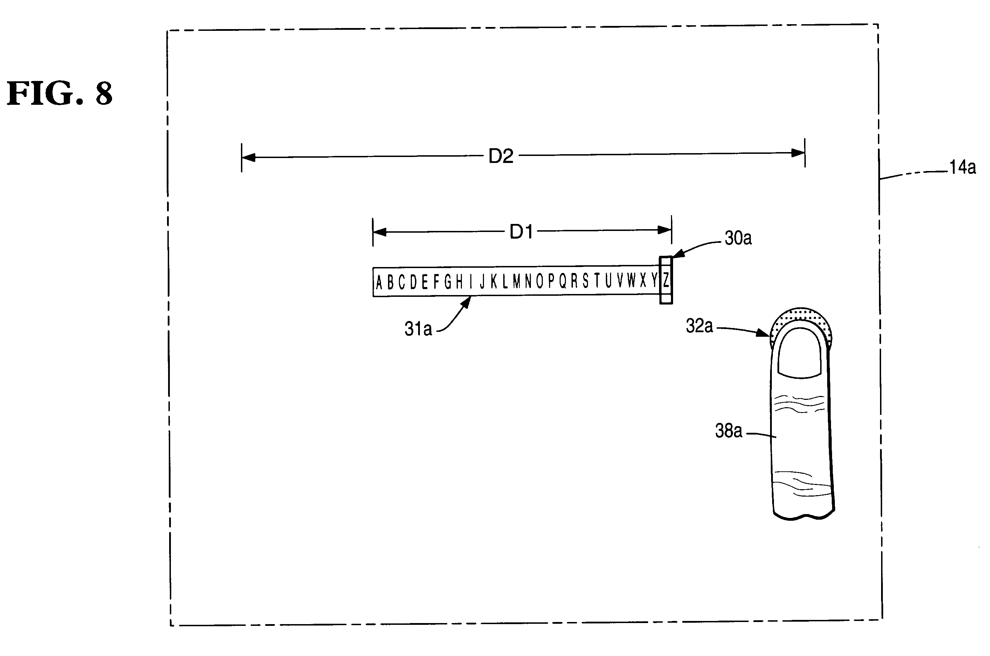

Referring to Fig. 7, a flowchart depicts operation of the cursor 30 just described hereinabove. As shown in step 100, the user's finger 38 is applied to the target area 32. The finger 38 is then moved to another position to drag the target area 32 from the position in Fig. 5 to the position shown in Fig. 6, as shown in step 102 of Fig. 7. When this occurs, the cursor 30 is dragged from the position in Fig. 5 to the position in Fig. 6, as shown in step 104 of Fig. 7. The user's finger 38 is then removed from the target area 32 as shown in step 106 in Fig. 7.

A number of advantages result from moving the cursor 30 in accordance with the present invention as described hereinabove. One advantage is that the desired target selection is not obscured by the finger 38 of user when the cursor 30 arrives at the location of the desired target location. Another advantage is that the cursor 30 is positioned quickly and accurately on the desired target selection when the cursor 30 arrives at the location of the desired target selection.

A second embodiment of the present invention is illustrated in Figs. 8-10. Since the embodiment of the invention illustrated in Figs. 8-10 is generally similar to the embodiment illustrated in Figs. 1-7, similar numerals are utilized to designate similar components, the suffix letter "a" being associated with the embodiment of Figs. 8-10 to avoid confusion.

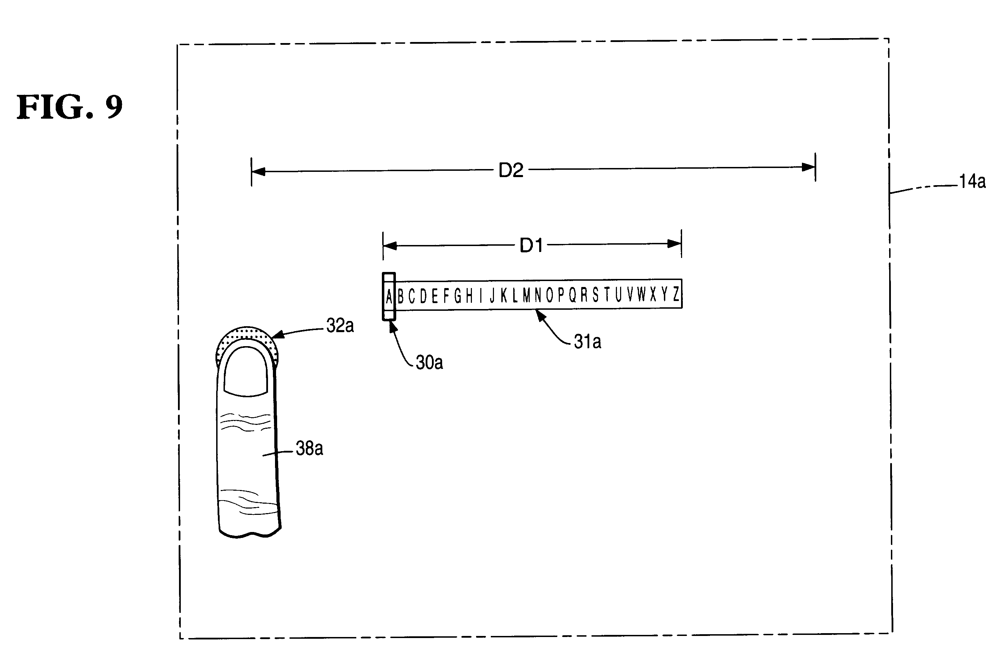

Referring to Fig. 8, the cursor 30a is at the rightmost position along the linear axis of the text string 31a. The physical size of the text string 31a in the embodiment shown in Fig. 8 is smaller than the physical size of the text string 31 in the embodiment shown in Figs. 1-7. As shown in Fig. 8, the cursor 30a is at the rightmost position along the linear axis of the text string 31a. The cursor 30a is movable along this linear axis from the rightmost position shown in Fig. 8 to the leftmost position shown in Fig. 9. The distance between the rightmost position of the cursor 30a shown in Fig. 8 and the leftmost position shown in Fig. 9 is designated with reference numeral "D1" in Figs. 8 and 9.

When the cursor 30a is at the rightmost position along the linear axis of the text string 31a shown in Fig. 8, the letter "Z" is being selected. The target area 32a in Fig. 8 is at the rightmost position along its corresponding linear axis which is parallel to the linear axis of the text string 31a. When the cursor 30a is at the leftmost position along the linear axis of the text string 31a shown in Fig. 8, the letter "A" is being selected. The target area 32a is at the leftmost position along its corresponding linear axis which is parallel to the linear axis of the text string 31a.

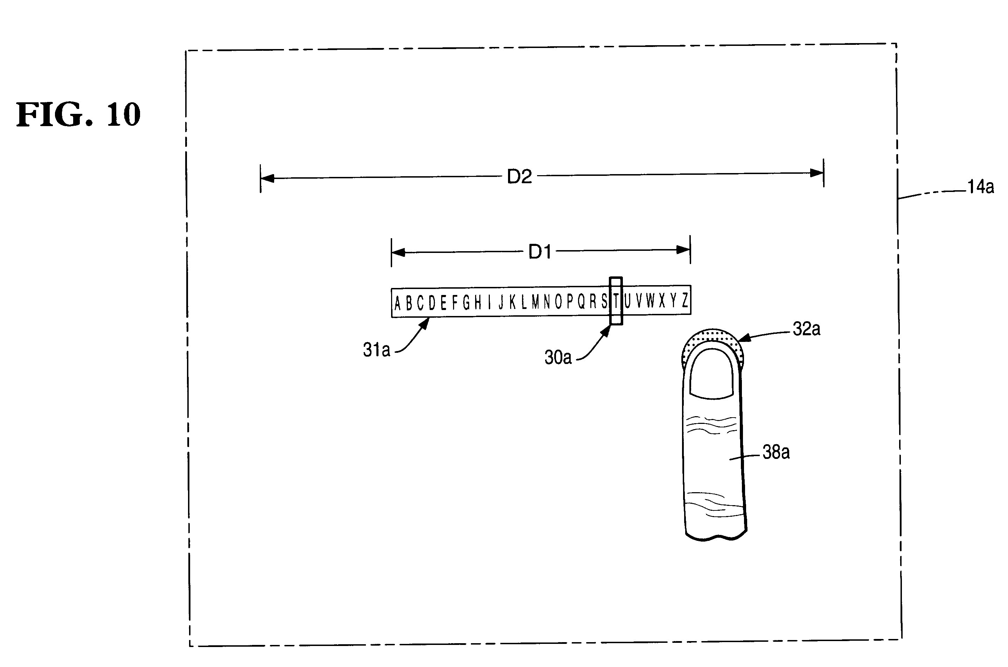

The target area 32a is movable along its linear axis from the rightmost position shown in Fig. 8 to the leftmost position shown in Fig. 9. The distance between the rightmost position of the target area 32a shown in Fig. 8 and the leftmost position of the target area 32a shown in Fig. 9 is designated with reference numeral "D2" in Figs. 8 and 9. The distance "D2" is greater than the distance "D1". The target area 32a and the cursor 30a are movable to a number of different positions between their rightmost and leftmost positions. For example, as shown in Fig. 10, the target area 32a and the cursor 30a are shown in positions in which the letter "T" is being selected by the cursor 30a.

It should be apparent that the distance "D1" is the maximum distance of movement of the cursor 30a along the linear axis of the text string 31a, and the distance "D2" is the maximum distance of movement of the target area 32a along its linear axis. Since the maximum distance ("D2") of movement of the target 32a is greater than the maximum distance ("D1") of movement of the cursor 30a, a scaling mechanism is advantageously provided in that a relatively large movement of the target area 32a results in a relatively small precise movement of the cursor 30a. This allows a user to more quickly and accurately position the cursor 30a at a desired target location on the display screen 14a.

With reference to the pair of linear transformation equations described hereinabove with respect the embodiment in Figs. 1-7 and the above-described movement of the cursor 30a and the target area 32a as shown in Figs. 8-10, it should be apparent that the transformation comprises vertical translation which is represented by the parameter "f" and horizontal scaling which is represented by the parameter "a". Since there is no rotational translation, the parameters "b" and "d" are zero. There is no vertical scaling in the movement of the cursor 30a and the target area 32a as shown in Figs. 8-10. Since there is no vertical scaling, the parameter "e" has a value of one.

Although only embodiments in which the target area and cursor are moveable along horizontal linear axes are described, it should be appreciated that further embodiments in which the target area and cursor can be moved in any direction across the display screen are contemplated. Further, the touch sensitive screen (14) and the display screen (16) may be combined as a single integral screen or a thin flexible membrane may overlie the display screen.

**Claims**

1.  A method of moving a cursor (30) from a first position to a second position on a touch-sensitive display (14,16) screen of a display system (10), characterized by the steps of:

    moving a target area (32) located at a position remote from the cursor (30) from a third position to a fourth position on the touch-sensitive display screen (14,16), in response to a user touching the touch-sensitive display screen (14,16) in the region of the target area (32) and dragging the target area (32) from the third position to the fourth position; and

moving the cursor (30) from the first position to the second position, in response to the target area (32) being dragged from the third position to the fourth position.

2. A method according to claim 1, characterized in that the target area (32) is located below the cursor (30) on the touch-sensitive display screen (14,16) of the display system (10).

3. A method according to claim 1, characterized in that the display coordinates of the cursor (30) on the touch-sensitive display screen (14,16) are offset from the location at which the touch-sensitive display screen (14,16) is touched.

4. A method according to claim 1, characterized in that the target area is movable along a linear axis on the touch-sensitive display screen (14,16) of the display system (10) and the cursor (30) is movable along a linear axis which is parallel to the linear axis of the target area (32).

5. A method according to claim 3, characterized in that the linear axes lie horizontally on the touch-sensitive display screen (14,16) of the display system (10).

6. A method according to claim 1, characterized in that the distance between the third and fourth positions on the display screen (14) is greater than the distance between the first and second positions on the display screen (14).

7. A display system (10) comprising:

a touch-sensitive display screen (14,16), a processing unit (18) including cursor display means (24,26) for providing a cursor (30) on the touch-sensitive display screen (14,16), characterized by target area display means (24,26) for providing a target area (32) on the touch-sensitive display screen (14,16) at a position remote from the cursor (30), target area control means (40,24,50,26) for moving the target area (32) from a third position to a fourth position on the touch-sensitive display screen (14,16) in response to a user touching the touch-sensitive display screen (14,16) in the region of the target area and dragging the target area (32) from the third position to the fourth position and cursor control means (50,24,26) for moving the cursor (30) from a first position to a second position on the touch-sensitive display screen (14,16) when the target area (32) moves from the third position to the fourth position.

8. A display system according to claim 7, characterized in that the processing unit (18) includes touch-screen control circuitry (40) which monitors the touch-sensitive display screen (14,16) and provides output signals in response thereto.

9. A display system according to claim 8, characterized in that the processing unit (18) includes a microcomputer (24) which monitors the touch-screen circuitry (40) and provides output signals to the display touch-sensitive screen (14,16) in response to the output signals from the touch-screen control circuitry (40).

10. A display system according to claim 9, characterized in that the processing unit includes a memory (50) which stores instructions of programs enabling the microcomputer (24) to monitor the touch-screen circuitry (40) and to provide the output signals to the touch-sensitive display screen (14,16).

# FIG. 1

# FIG. 2

# FIG. 7

```
        START

TOUCH TARGET
WITH FINGER                    100

DRAG TARGET FROM INITIAL
POSITION TO DESIRED POSITION   102

MOVE CURSOR FROM INITIAL
POSITION TO DESIRED POSITION   104

REMOVE FINGER
FROM TARGET                    106

         END
```

**FIG. 3**

EP 0 795 811 A1

FIG. 4

A B C D E F G H I J K L M N O P Q R S T U V W X Y Z

30

31

32

33

35

14

EP 0 795 811 A1

# FIG. 5

31

30

| A | B | C | D | E | F | G | H | I | J | K | L | M | N | O | P | Q | R | S | T | U | V | W | X | Y | Z |

32

38

14

EP 0 795 811 A1

## FIG. 6

EP 0 795 811 A1

## FIG. 8

D2

D1

30a

`ABCDEFGHIJKLMNOPQRSTUVWXYZ`

31a

32a

38a

14a

FIG. 9

EP 0 795 811 A1

# FIG. 10

European Patent
Office

**EUROPEAN SEARCH REPORT**

Application Number

EP 97 30 1000

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 903 012 A (OHUCHI JUNICHI) 20 February 1990<br>* column 10, line 17 - column 11, line 44; figures 7,9- *<br>* column 13, line 64 - column 14, line 17 *<br>--- | 1-10 | G06F3/033 |
| X | WO 85 05477 A (HUGHES AIRCRAFT CO) 5 December 1985<br>* page 13, line 12 - page 14, line 5 *<br>* page 17, line 8 - line 32 *<br>* page 18, line 21 - line 30; figures 4,9 *<br>--- | 1-10 | |
| X | US 5 317 140 A (DUNTHORN DAVID I) 31 May 1994<br>* column 19, line 1 - line 15; figure 1A *<br>--- | 1-5,7-10 | |
| X | PATENT ABSTRACTS OF JAPAN<br>vol. 017, no. 515 (P-1614), 16 September 1993<br>& JP 05 134641 A  (NAGANO JAPAN RADIO CO), 28 May 1993,<br>* abstract *<br>----- | 1-5,7-10 | TECHNICAL FIELDS SEARCHED (Int.Cl.6)<br><br>G06F |

The present search report has been drawn up for all claims

| Place of search | Date of completion of the search | Examiner |
|---|---|---|
| THE HAGUE | 1 July 1997 | Nygren, P |

EPO FORM 1503 03.82 (P04C04)